**Europäisches Patentamt**

**European Patent Office**

**Office européen des brevets**

(19)

(11) Veröffentlichungsnummer : **0 029 198**
**B1**

(12)

# EUROPÄISCHE PATENTSCHRIFT

(45) Veröffentlichungstag der Patentschrift :
04.07.84

(51) Int. Cl.³ : **G 02 B   5/16**

(21) Anmeldenummer : **80106930.3**

(22) Anmeldetag : **10.11.80**

(54) Längswasserdichtes Lichtwellenleiterkabel und Verfahren zu seiner Herstellung.

(30) Priorität : 14.11.79 DE 2946027

(43) Veröffentlichungstag der Anmeldung :
27.05.81 Patentblatt 81/21

(45) Bekanntmachung des Hinweises auf die Patenterteilung : 04.07.84 Patentblatt 84/27

(84) Benannte Vertragsstaaten :
AT BE CH DE FR GB IT LI NL SE

(56) Entgegenhaltungen :
EP-A- 0 015 425
DE-A- 2 728 642
GB-A- 1 435 007
GB-A- 2 046 471
US-A- 3 903 013

(73) Patentinhaber : SIEMENS AKTIENGESELLSCHAFT
Berlin und München Wittelsbacherplatz 2
D-8000 München 2 (DE)

(72) Erfinder : Lange, Gerhard, Dipl.-Chem.
Ursberger Strasse 13
D-8000 München 80 (DE)
Erfinder : Sailer, Helmut
Diemendorfer Strasse 8
D-8000 München 71 (DE)

## Beschreibung

Die Erfindung bezieht sich auf ein Lichtwellenleiterkabel, bei dem mindestens ein faserförmiger Lichtwellenleiter im Inneren einer Schutzhülle angeordnet ist und der verbleibende Innenraum mit einer gelartigen Substanz ausgefüllt ist.

Aus der US-A 1 435 007 ist ein Nachrichtenkabel bekannt, dessen Innenraum mit einer Substanz gefüllt ist, die aus einem Gemisch aus Öl und einem Thixotropierungsmittel besteht.

Aus der DE-OS 27 28 642 ist ein längswasserdichtes Lichtwellenleiterkabel bekannt, bei dem im Inneren der Hülle eine zähflüssige, im Kabel nicht mehr fließende oder tropfende Substanz eingebracht ist. Als Substanzen können dabei verwendet werden schwachvernetzende Silikonharze, Polyesterharze, thermoplastischer Polyuretan-Kautschuk oder angequollenes Polystyrol in Öl. Mit so aufgebauten Lichtwellenleiterkabeln läßt sich eine gute Längswasserdichtigkeit erzielen.

Es soll auch sichergestellt werden, daß die als Füllmasse dienende Substanz den Aufbau von Zug- oder Druckkräften bei den Lichtwellenleitern vermeidet, weil sonst die Dämpfung der Ader in unzulässiger Weise erhöht würde. Die verwendeten vernetzenden Füllmassen erfordern hierfür einen relativ hohen Anteil von Weichmachern.

Allgemein besteht bei Kabelfüllmassen für Lichtwellenleiterkabel das Problem, daß während des Füllvorgangs die Substanz hinreichend dünnflüssig sein soll, um den Herstellungsvorgang zu ermöglichen bzw. zu vereinfachen. In dem gefüllten Kabel soll eine weitgehend temperaturunabhängige gelartige Konsistenz erzielt werden, um den Aufbau von Zug- oder Druckkräften, welche die Dämpfung des Lichtwellenleiters erhöhen würden, zu vermeiden. Außerdem besteht die Forderung, daß die als Füllmasse verwendete Substanz einfach in der Handhabung und preiswert sein soll.

Der Erfindung liegt die Aufgabe zugrunde, eine Substanz zu schaffen, die gut zu verarbeiten und besonders wirtschaftlich ist und darüber hinaus in ihrer Gelphase möglichst gut fixiert bleibt.

Gemäß der Erfindung, welche sich auf ein Lichtwellenleiterkabel der eingangs genannten Art bezieht, wird dies dadurch erreicht, daß die aus einem Gemisch aus einem Öl und einem Thixotropierungsmittel bestehende Substanz zusätzlich ein organisches Verdickungsmittel enthält, das ganz oder teilweise aus halogenierten und/oder halogenfreien Kohlenwasserstoff-Polymeren besteht.

Das Öl stellt eine weitgehend viskose Flüssigkeit dar, wobei durch das zugesetzte Thixotropierungsmittel der Effekt erzielt wird, daß im Ruhezustand die Substanz einen nicht fließenden (also nahezu festen), jedoch noch gelartigen Körper bildet, der bei mechanischer Beanspruchung vorübergehend die Eigenschaften einer Flüssigkeit annimmt, so daß der Lichtwellenleiter sich dort praktisch frei bewegen kann. Ist die äußere mechanische Beanspruchung dagegen so klein, daß es noch zu keiner Verflüssigung der Substanz kommt, so genügt die gelartige Konsistenz der Substanz für die sehr geringe ungehinderte Bewegung des Lichtwellenleiters und es sind somit auch hierbei unzulässige mechanische Beanspruchungen zu vermeiden. Um sicherzustellen, daß auch unter extremen Bedingungen und für lange Zeit das Öl in der Gelphase fixiert bleibt, ist der Substanz zusätzlich ein organisches Verdickungsmittel hinzugefügt.

Ein weiterer Vorzug der erfindungsgemäßen Substanz besteht darin, daß das Öl bzw. die Substanz so ausgewählt werden kann, daß Wechselwirkungen mit dem als Schutzüberzug auf den Lichtwellenleiter-Fasern verwendeten Beschichtungen (Coatings and Aderpolymeren) und/oder der Schutzhülle in einfacher Weise vermieden werden können.

Wenn somit bei der Herstellung oder Verarbeitung (z. B. Verlegung) des Kabels mechanische Kräfte in einem bestimmten Bereich auftreten, wird dort der Lichtwellenleiter nicht in seiner Bewegungsmöglichkeit unzulässig gehindert und kann eine mechanisch spannungsfreie Position einnehmen. Dadurch bleiben die guten optischen Übertragungseigenschaften des Kabels unverändert. Die erfindungsgemäße Substanz hat auch den besonderen Vorteil, daß ihre vorstehend beschriebenen Eigenschaften in einem weiten Temperaturbereich, z. B. von − 10° bis + 80° erhalten bleiben.

Bei dem Verfahren zur Herstellung eines derartigen Kabels wird ein Gemisch aus dem Öl und dem Thixotropierungsmittel sowie dem Verdickungsmittel erzeugt und über eine dünne Kanüle während des Extrusionsprozesses der Schutzhülle in diese mit Druck eingefüllt und erstarrt unmittelbar nach dem Austritt aus der Kanüle, so daß es nicht mehr ausfließen kann.

Um einen eventuellen ungünstigen Einfluß von Sauerstoff (insbesondere Luftsauerstoff) auf das in der Substanz enthaltene Öl und/oder das Verdickungsmittel vorzubeugen, wird zweckmäßig ein Antioxidans zugefügt. Hierfür eignet sich besonders ein polymeres 2,2,4 Trimethyl-1,2 dihydrochinolin oder 4,4'-Thiobis-(3-methyl-6-tertiäres Butylphenol). Benötigt werden hiervon etwa 0,1 Gewichtsprozente.

Weiterhin können der Substanz zur Kennzeichnung Farbstoffe hinzugefügt werden.

Insbesondere bei Verwendung als Seelenfüllmasse können zusätzlich der Substanz noch anorganische Füllstoffe z. B. Kaolin; Kreide od. dgl. beigemischt werden und zwar etwa 10 Gewichtsprozente.

Sonstige Weiterbildungen der Erfindung sind in den Unteransprüchen wiedergegeben.

Eine Reihe von Ausführungsbeispielen der Erfindung ist zusammen mit ergänzenden technischen Angaben in den nachfolgenden Tabellen zusammengestellt, wobei die Tabelle II rechts an die Tabelle I angesetzt zu denken ist.

2

Tabelle I

| | Basisöle | | | Thixotropiermittel | | |
|---|---|---|---|---|---|---|
| | aromatische u/o aliphatische Kohlenwasserstofföle | Silikonöle | halogenierte Biphenyle | kolloidale Kieselsäure mit u. ohne $Al_2O_3$ | Kohlenstoff | modifizierter Montmorillonit |
| Viskosität (mPa · s) | $5\text{-}10^4$ | $5\text{-}10^4$ | 1-20 (100 °C) | — | — | — |
| aktive Oberfläche m²/g | — | — | — | 50-500 | $20\text{-}10^3$ | — |
| Mol-Gewicht | | | | — | — | — |
| Erweichungspunkt | — | — | — | — | — | — |
| Aderfüllmasse | | | | | | |
| 1. Gew.% | 98-50 | — | — | 2-20 | 2-40 | 0,2-10 |
| 2. Gew.% | — | 98-50 | — | 2-20 | 2-40 | 0,2-10 |
| 3. Gew.% | — | — | 98-50 | 2-20 | 2-40 | 0,2-10 |
| Seelenfüllmasse | | | | | | |
| 1. Gew.% | 98-30 | — | — | 2-20 | 2-40 | 0,2-10 |
| 2. Gew.% | — | 98-30 | — | 2-20 | 2-40 | 0,2-10 |
| 3. Gew.% | — | — | 98-30 | 2-20 | 2-40 | 0,2-10 |
| Aderfüllmasse | | | | | | |
| 1. Gew.% | 72 | — | — | 3 | — | — |
| 2. Gew.% | — | 96 | — | 4 | — | — |
| 3. Gew.% | — | — | 90 | 6 | — | — |
| Seelenfüllmasse | | | | | | |
| 1. Gew.% | 78 | — | — | 2 | — | — |
| 2. Gew.% | — | 80 | — | 10 | — | — |
| 3. Gew.% | — | — | 70 | 10 | — | 5 |

Tabelle II

| | Verdickungsmittel organisch | | Zusatzstoffe | | |
|---|---|---|---|---|---|
| | halogenierte und halogenfrei Kohlenwasserstoff-Polymere | halogenierte und halogen freie Kohlenwasserstoff-Wachse | Antioxidantien | Farbstoffe (gegebenenfalls) | Füllstoffe (anorganisch) |
| Viskosität (mPa · s) | $10^3$-$10^5$ (180 °C) | — | | | |
| aktive Oberfläche m²/g | — | — | | | |
| Mol-Gewicht | — | $10^3$-$10^4$ | | | |
| Erweichungspunkt | > 90 °C | > 90 °C | | | |
| Aderfüllmasse | | | | | |
| 1. Gew.% | 0-50 | 0-20 | x | x | — |
| 2. Gew.% | — | — | — | x | — |
| 3. Gew.% | 0-50 | 0-20 | x | x | — |
| Seelenfüllmasse | | | | | |
| 1. Gew.% | 0-50 | 0-20 | x | x | — |
| 2. Gew.% | — | — | — | x | — |
| 3. Gew.% | 0-50 | 0-20 | x | x | — |
| Aderfüllmasse | | | | | |
| 1. Gew.% | 25 | — | 0,1 | x | — |
| 2. Gew.% | — | — | — | x | — |
| 3. Gew.% | — | 4 | 0,1 | x | — |
| Seelenfüllmasse | | | | | |
| 1. Gew.% | 20 | — | 0,1 | x | — |
| 2. Gew.% | — | — | — | x | 10 |
| 3. Gew.% | — | 5 | 0,1 | x | 10 |

Die Viskosität des Kohlenwasserstofföls usw. des Silikonöls wird zweckmäßig zwischen 200 bis 400 mPa · s gewählt.

Als modifizierter Montmorillonit kann vorteilhaft das unter dem Handesnamen « Bentonit » bekannte Erzeugnis der Fa. Kronos-Titan eingesetzt werden.

Die in der Tabelle angegebenen Thixotropierungsmittel können sowohl jeweils allein als auch gemeinsam verwendet werden. Das gleiche gilt für die Verdichtungsmittel.

Die für die Ader- und Seelenfüllmassen angegebenen jeweils 3 Rezepturen ergaben bei der Erprobung besonders günstige Werte.

**Ansprüche**

1. Lichtwellenleiterkabel, bei dem mindestens ein faserförmiger Lichtwellenleiter im Inneren einer Schutzhülle angeordnet ist und der verbleidende Innenraum mit einer gelartigen Substanz ausgefüllt ist, dadurch gekennzeichnet, daß die aus einem Gemisch aus einem Öl und einem Thixotropierungsmittel bestehende Substanz zusätzlich ein organisches Verdickungsmittel enthält, das ganz oder teilweise aus halogenierten und/oder halogenfreien Kohlenwasserstoff-Polymeren besteht.

2. Lichtwellenleiterkabel nach Anspruch 1, dadurch gekennzeichnet, daß das Öl aus aromatischen oder aliphatischen Kohlenwasserstoffölen besteht.

3. Lichtwellenleiterkabel nach Anspruch 2, dadurch gekennzeichnet, daß als Öl Paraffinöl verwendet ist.

4. Lichtwellenleiterkabel nach Anspruch 1, dadurch gekennzeichnet, daß das Öl aus Silikonöl besteht.

5. Lichtwellenleiterkabel nach Anspruch 1, dadurch gekennzeichnet, daß das Öl aus halogenierten, insbesondere chlorierten Biphenylen besteht.

6. Lichtwellenleiterkabel nach einem der vorhergehenden Ansprüche, dadurch gekennzeichnet, daß bei Aderfüllmassen zwischen 98 und 50 Gewichtsprozent und bei Seelenfüllmassen zwischen 98 und 30 Gewichtsprozent der Substanz auf das Öl entfallen.

7. Lichtwellenleiterkabel nach einem der vorhergehenden Ansprüche, dadurch gekennzeichnet, daß das Thixotropierungsmittel ganz oder teilweise aus kolloidaler Kieselsäure besteht.

8. Lichtwellenleiterkabel nach Anspruch 7, dadurch gekennzeichnet, daß die kolloidale Kieselsäure einen Zusatz von $Al_2O_3$ aufweist.

9. Lichtwellenleiterkabel nach einem der Ansprüche 7 oder 8, dadurch gekennzeichnet, daß 2 bis 20 Gewichtsprozente der Substanz auf kollidale Kieselsäure entfallen.

10. Lichtwellenleiterkabel nach einem der vorhergehenden Ansprüche, dadurch gekennzeichnet, daß das Thixotropierungsmittel ganz oder teilweise aus Kohlenstoff besteht.

11. Lichtwellenleiterkabel nach Anspruch 10, dadurch gekennzeichnet, daß 2 bis 40 Gewichtsprozente der Substanz auf Kohlenstoff entfallen.

12. Lichtwellenleiterkabel nach einem der vorhergehenden Ansprüche, dadurch gekennzeichnet, daß das Thixotropierungsmittel ganz oder teilweise aus modifiziertem Montmorrillonit besteht.

13. Lichtwellenleiterkabel nach Anspruch 12, dadurch gekennzeichnet, daß 0,2 bis 10 Gewichtsprozente der Substanz aud modifizierten Montmorillonit entfallen.

14. Lichtwellenleiterkabel nach einem der vorhergehenden Ansprüche dadurch gekennzeichnet, daß 0 bis 50 Gewichtsprozente der Substanz auf Kohlenwasserstoff-Polymere entfallen.

15. Lichtwellenleiterkabel nach einem der vorhergehenden Ansprüche, dadurch gekennzeichnet, daß das Verdickungsmittel aus halogenierten und/oder halogenfreien Kohlenwasserstoff-Wachsen besteht.

16. Lichtwellenleiterkabel nach Anspruch 15, dadurch gekennzeichnet, daß 0 bis 20 Gewichtsprozente der Substanz auf Kohlenwasserstoff-Wachse entfallen.

17. Lichtwellenleiterkabel nach einem der vorhergehenden Ansprüche, dadurch gekennzeichnet, daß die Substanz ein Antioxidans etwa in der Größenordnung von 0,1 Gewichtsprozent enthält.

18. Lichtwellenleiterkabel nach einem der vorhergehenden Ansprüche, dadurch gekennzeichnet, daß die Substanz, insbesondere bei Verwendung als Seelenfüllmasse, einen anorganischen Füllstoff enthält.

19. Lichtwellenleiterkabel nach Anspruch 18, dadurch gekennzeichnet, daß der Füllstoff bis zu 10 Gewichtsprozent der Substanz ausmacht.

20. Lichtwellenleiterkabel nach einem der vorhergehenden Ansprüche, dadurch gekennzeichnet, daß die Substanz zusätzlich zur Kennzeichnung Farbstoff enthält.

21. Lichtwellenleiterkabel nach Anspruch 1, dadurch gekennzeichnet, daß die Substanz zu etwa 72 Gewichtsprozent aus aromatischen oder aliphatischen Kohlenwasserstoffölen, zu etwa 3 Gewichtsprozent aus kolloidaler Kieselsäure und zu etwa 25 Gewichtsprozent aus Kohlenwasserstoff-Polymeren als Verdickungsmittel besteht.

22. Lichtwellenleiterkabel nach Anspruch 1, dadurch gekennzeichnet, daß die Substanz zu etwa 90 Gewichtsprozent aus halogenierten Biphenylen, zu etwa 6 Gewichtsprozent aus kolloidaler Kieselsäure und zu etwa 4 Gewischtsprozent aus Kohlenwasserstoff-Wachsen als Verdickungsmittel besteht.

23. Lichtwellenleiterkabel nach einem der Ansprüche 21 oder 22, gekennzeichnet durch die Verwendung als Aderfüllmasse.

24. Lichtwellenleiterkabel nach Anspruch 1, dadurch gekennzeichnet, daß die Substanz zu etwa 78 Gewichtsprozent aus aromatischen oder aliphatischen Kohlenwasserstoffölen, zu etwa 2 Gewichtsprozent aus kolloidaler Kieselsäure und zu etwa 20 Gewichtsprozent aus Kohlenwasserstoff-Polymeren als Verdickungsmittel besteht.

25. Lichtwellenleiterkabel nach Anspruch 1, dadurch gekennzeichnet, daß die Substanz zu etwa 70 Gewichtsprozent aus halogenierten Biphenylen, zu etwa 10 Gewichtsprozent aus kolloidaler Kieselsäure, zu etwa 5 Gewichtsprozent aus Montmorillonit, zu etwa 5 Gewichtsprozent aus Kohlenwasserstoff-Wachsen und zu etwa 10 Gewichtsprozent aus einem anorganischen Füllstoff besteht.

26. Lichtwellenleiterkabel nach einem der Ansprüche 2, 3 oder 4, dadurch gekennzeichnet, daß die Viskosität des Kohlenwasserstofföls bzw. des Silikonöls zwischen 5 bis $1.10^4$ mPa · s, vorzugsweise zwischen 200 bis 400 mPa · s gewählt ist.

27. Lichtwellenleiterkabel nach Anspruch 5, dadurch gekennzeichnet, daß die Viskosität des Biphenyls zwischen 1 bis 20 mPa · s gewählt ist.

28. Verfahren zur Herstellung eines Kabels nach einem der vorhergehenden Ansprüche, dadurch gekennzeichnet, daß ein Gemisch aus einem Öl und einem Thixotropierungsmittel sowie dem Verdickungsmittel erzeugt und über eine dünne Kanüle während des Extrusionsprozesses der Schutzhülle in diese mit Druck eingefüllt wird und unmittelbar nach dem Ausfließen erstarrt.

## Claims

1. An optical waveguide cable, in which at least one fibre-shaped optical waveguide is arranged within a protective sheath, the remaining internal space being filled with a gel-like material, characterised in that the material consisting of a mixture of oil and a thixotropy-producing agent, additionally contains an organic thickening agent which consists wholly or in part of halogenated and/or halogen-free hydrocarbon polymers.

2. An optical waveguide cable according to Claim 1, characterised in that the oil consists of aromatic or aliphatic hydrocarbon oils.

3. An optical waveguide cable according to Claim 2, characterised in that paraffin oil is used as the oil.

4. An optical waveguide cable according to Claim 1, characterised in that the oil consists of silicone oil.

5. An optical waveguide cable according to Claim 1, characterised in that the oil consists of halogenated, in particular chlorinated, biphenyls.

6. An optical waveguide cable according to one of the preceding Claims, characterised in that in the case of core filling materials the oil forms between 98 and 50 % by weight of the material, and in the case of bore filling materials, the oil forms between 98 and 30 % by weight of the material.

7. An optical waveguide cable according to one of the preceding Claims, characterised in that the thixotropyproducing agent consists wholly or in part of colloidal silicic acid.

8. An optical waveguide cable according to Claim 7, characterised in that the colloidal silicic acid has an addition of $Al_2O_3$.

9. An optical waveguide cable according to one of Claims 7 and 8, characterised in that colloidal silicic acid forms 2 to 20 % by weight of the material.

10. An optical waveguide cable according to one of the preceding Claims, characterised in that the thixotropyproducing agent consists wholly or in part of carbon.

11. An optical waveguide cable according to Claim 10, characterised in that carbon forms 2 to 40 % by weight of the material.

12. An optical waveguide cable according to one of the preceding Claims, characterised in that the thixotropyproducing agent consists wholly or in part of a modified montmorillonite.

13. An optical waveguide cable according to Claim 12, characterised in that modified montmorillonite forms 0.2 to 10 % by weight of the material.

14. An optical waveguide cable according to one of the preceding Claims, characterised in that 0 to 50 % by weight of the material consists of hydrocarbon polymers.

15. An optical waveguide cable according to one of the preceding Claims, characterised in that the thickening agent consists of halogenated and/or halogen-free hydrocarbon waxes.

16. An optical waveguide cable according to Claim 15, characterised in that from 0 to 20 % weight of the material is constituted by hydrocarbon waxes.

17. An optical waveguide cable according to one of the preceding Claims, characterised in that the material contains an antioxidant approximately in the order of magnitude of 0.1 % by weight.

18. An optical waveguide cable according to one of the preceding Claims, characterised in that the material contains an inorganic filler, in particular, when used as core filling material.

19. An optical waveguide cable according to Claim 18, characterised in that the filler constitutes up to 10 % by weight of the material.

20. An optical waveguide cable according to one of the preceding Claims, characterised in that the material additionally contains dyestuff for identification purposes.

21. An optical waveguide cable according to Claim 1, characterised in that the material consists of about 72 % by weight of aromatic or aliphatic hydrocarbon oils, about 3 % by weight of colloidal silicic acid and about 25 % by weight of hydrocarbon polymers as thickening agent.

22. An optical waveguide cable according to Claim 1, characterised in that the material consists of about 90 % by weight of halogenated biphenyls, about 6 % by weight of colloidal silicic acid and about 4 % by weight of hydrocarbon waxes as thickening agent.

23. An optical waveguide cable according to one of Claims 21 and 22, characterised by use as core filling material.

24. An optical waveguide cable according to Claim 1, characterised in that the material consists of about 78 % by weight of aromatic or aliphatic hydrocarbon oils, about 2 % by weight of colloidal silicic acid and about 20 % by weight of hydrocarbon polymers as thickening agent.

25. An optical waveguide cable according to Claim 1, characterised in that the material consists of about 70 % by weight of halogenated biphenyls, about 10 % by weight of colloidal silicic acid, about 5 % by weight of montmorillonite, about 5 % by weight of hydrocarbon waxes and about 10 % by weight of an inorganic filler.

26. An optical waveguide cable according to one of Claims 2, 3 or 4, characterised in that the viscosity of the hydrocarbon oil or the silicone oil, as the case may be, is selected to be between 5 and $1.10^4$ mPa · s, preferably between 200 and 400 mPa · s.

27. An optical waveguide cable according to Claim 5, characterised in that the viscosity of the biphenyl is selected to be between 1 and 20 mPa · s.

28. A process for the production of a cable according to one of the preceding Claims, characterised in that a mixture is produced from an oil, a thixotropy-producing agent and the thickening agent and during the extrusion of the protective sheath, is filled into the latter under pressure through a thin tube, and congealed immediately after discharge.

**Revendications**

1. Câble à guide d'ondes optiques, dans lequel au moins un guide d'ondes optiques en forme de fibre est disposé à l'intérieur d'une enveloppe protectrice et l'espace intérieur subsistant est rempli par une substance du genre d'un gel, caractérisé par le fait que la substance constituée par un mélange formé d'une huile et d'un agent thixotropique contient en outre un agent épaississant organique qui est constitué en totalité ou en partie par des polymères d'hydrocarbures halogénés et/ou non halogénés.

2. Câble à guide d'ondes optiques selon la revendication 1, caractérisé par le fait que l'huile est constituée par des huiles d'hydrocarbures aromatiques ou aliphatiques.

3. Câble à guide d'ondes optiques suivant la revendication 2, caractérisé par le fait qu'on utilise comme huile de l'huile de paraffine.

4. Câble à guide d'ondes optiques suivant la revendication 1, caractérisé par le fait que l'huile est constituée par de l'huile de silicones.

5. Câble à guide d'ondes optiques suivant la revendication 1, caractérisé par le fait que l'huile est constituée par des biphényles halogénés, notamment chlorés.

6. Câble à guide d'ondes optiques suivant l'une des revendications précédentes, caractérisé par le fait que la substance contient entre 98 et 50 % en poids d'huile dans le cas de masses de remplissage pour des conducteurs isolés et entre 98 et 30 % en poids d'huile dans le cas de masses de remplissage pour des assemblages de conducteurs.

7. Câble à guide d'ondes optiques suivant l'une des revendications précédentes, caractérisé par le fait que l'agent thixotropique est constitué en totalité ou en partie par de l'acide silicique colloïdal.

8. Câble à guide d'ondes optiques suivant la revendication 7, caractérisé par le fait que l'acide silicique colloïdal contient un additif de $Al_2O_3$.

9. Câble à guide d'ondes optiques suivant l'une des revendications 7 ou 8, caractérisé par le fait que la substance contient 2 à 20 % en poids d'acide silicique colloïdal.

10. Câble à guide d'ondes optiques suivant l'une des revendications précédentes, caractérisé par le fait que l'agent thixotropique est constitué en totalité ou en partie par du carbone.

11. Câble à guide d'ondes optiques suivant la revendication 10, caractérisé par le fait que la substance contient 2 à 40 % en poids de carbone.

12. Câble à guide d'ondes optiques suivant l'une des revendications précédentes, caractérisé par le fait que l'agent thixotropique est constitué en totalité ou en partie par de la montmorillonite modifiée.

13. Câble à guide d'ondes optiques suivant la revendication 10, caractérisé par le fait que la substance contient 0,2 à 10 % en poids de montmorillonite modifiée.

14. Câble à guide d'ondes optiques suivant l'une des revendications précédentes, caractérisé par le fait que la substance contient 0 à 50 % en poids de polymères d'hydrocarbures.

15. Câble à guide d'ondes optiques suivant l'une des revendications précédentes, caractérisé par le fait que l'agent épaississant est constitué par des cires d'hydrocarbures halogénées et/ou non halogénées.

16. Câble à guide d'ondes optiques suivant la revendication 15, caractérisé par le fait que la substance contient 0 à 20 % en poids de cire d'hydrocarbures.

17. Câble à guide d'ondes optiques suivant l'une des revendications précédentes, caractérisé par le fait que la substance contient un agent anti-oxydant en une proportion égale à environ 0,1 % en poids.

18. Câble à guide d'ondes optiques suivant l'une des revendications précédentes, caractérisé par le fait que la substance contient une matière de remplissage minérale, notamment dans le cas de son utilisation en tant que masse de remplissage pour des assemblages de conducteurs.

19. Câble à guide d'ondes optiques suivant la revendication 18, caractérisé par le fait que la matière de remplissage forme jusqu'à 10 % en poids de la substance.

20. Câble à guide d'ondes optiques suivant l'une des revendications précédentes, caractérisé par le fait que la substance contient en outre un colorant pour sa caractérisation.

21. Câble à guide d'ondes optiques suivant la revendication 1, caractérisé par le fait que la substance contient jusqu'à environ 72 % en poids d'huile d'hydrocarbures aromatiques ou aliphatiques, jusqu'à environ 3 % en poids d'acide silicique colloïdal et jusqu'à environ 25 % en poids de polymères d'hydrocarbures servant d'agents épaississants.

22. Câble à guide d'ondes optiques suivant la revendication 1, caractérisé par le fait que la substance contient jusqu'à environ 90 % en poids de biphényles halogénés, jusqu'à environ 6 % en poids d'acide silicique colloïdal et jusqu'à environ 4 % en poids de cires d'hydrocarbures servant d'agent épaississant.

23. Câble à guide d'ondes optiques suivant l'une des revendications 21 ou 22, caractérisé par son utilisation en tant que masse de remplissage pour conducteurs.

24. Câble à guide d'ondes optiques suivant la revendication 1, caractérisé par le fait que la substance contient jusqu'à environ 78 % en poids d'huiles d'hydrocarbures aromatiques ou aliphatiques, jusqu'à environ 2 % en poids d'acide silicique colloïdal et jusqu'à environ 20 % en poids de polymères d'hydrocarbures servant d'agent épaississant.

25. Câble à guide d'ondes optiques suivant la revendication 1, caractérisé par le fait que la substance contient jusqu'à environ 70 % en poids de biphényles halogénés, jusqu'à environ 10 % en poids d'acide silicique colloïdal, jusqu'à environ 5 % en poids de montmorillonite, jusqu'à environ 5 % en poids de cires d'hydrocarbures et jusqu'à environ 10 % en poids d'une matière de remplissage minérale.

26. Câble à guide d'ondes optiques suivant l'une des revendications 2, 3 ou 4, caractérisé par le fait que la viscosité de l'huile d'hydrocarbures ou de l'huile de silicones est choisie entre 5 et $1.10^4$ mPa · s et de préférence entre 200 et 400 mPa · s.

27. Câble à guide d'ondes optiques suivant la revendication 5, caractérisé par le fait que la viscosité du biphényle est choisie entre 1 et 20 mPa · s.

28. Procédé pour fabriquer un câble suivant l'une des revendications précédentes, caractérisé par le fait qu'on réalise un mélange formé d'une huile et d'un agent thixotropique ainsi que de l'agent épaississant et qu'on l'introduit sous pression, pendant le processus d'extrusion de l'enveloppe protectrice, au moyen d'une canule dans cette enveloppe et que le mélange se solidifie aussitôt après son écoulement.